# EUROPEAN PATENT SPECIFICATION

(11) **EP 1 207 084 B1**
(45) Date of publication and mention of the grant of the patent: **01.12.2004**
(21) Application number: 01402940.9
(22) Date of filing: 15.11.2001
(51) Int. Cl.: B60R 16/02

(54) **Grommet**
Durchführungstülle
Douille de traversée

(30) Priority: 16.11.2000 JP 2000349280
(43) Date of publication of application: 22.05.2002
(73) Proprietor: Sumitomo Wiring Systems, Ltd., Yokkaichi-City, Mie, 510-8503 (JP)
(72) Inventor: Hashimoto, Takeshi, c/o Sumitomo Wiring, Yokkaichi-City, Mie 510-8503 (JP)
(74) Representative: Uchida, Kenji

(56) References cited:
- DE-A- 19 922 471
- US-A- 6 088 875
- PATENT ABSTRACTS OF JAPAN vol. 1998, no. 09, 31 July 1998 (1998-07-31) & JP 10 092243 A (YAZAKI CORP), 10 April 1998 (1998-04-10)

## Description

The present invention relates to a grommet, and more particularly to a grommet adapted for mounting a wire harness in a vehicle e.g. an automobile. In automobiles, such a wire harness is typically passed through a hole formed in an automobile panel such as a bulkhead. The wire harness is made to pass through grommet, the latter closing the space formed between the panel hole and the wire harness. In this manner, the grommet can protect the wire harness, and at the same time prevent water or dust from passing through the panel hole.

A vehicle, e.g. an automobile, is commonly divided into a engine compartment and a passenger compartment by a body panel generally referred to as a bulkhead. One or several panel holes is/are bored in the body panel, and the corresponding wire harness(es) is/are passed from the engine compartment to the passenger compartment through the panel hole(s). The space formed between the wire harness and the panel hole is then closed by a grommet. As mentioned above, the grommet thus protects the wire harness while it passes through the panel hole, and simultaneously prevents water, dust or noise generated in the motor compartment from entering into the passenger compartment.

There exists a so-called "one-motion grommet", in which the grommet is provided with an external circular groove and pressed into the hole in the panel along one direction, such that the external circular groove fits into the circular peripheral rim of the hole. The one-motion grommet, e.g. as disclosed in Japanese utility model application published under No. HEI 04-42982 (Figs.lA and 1B), has the advantage of being mounted very easily.

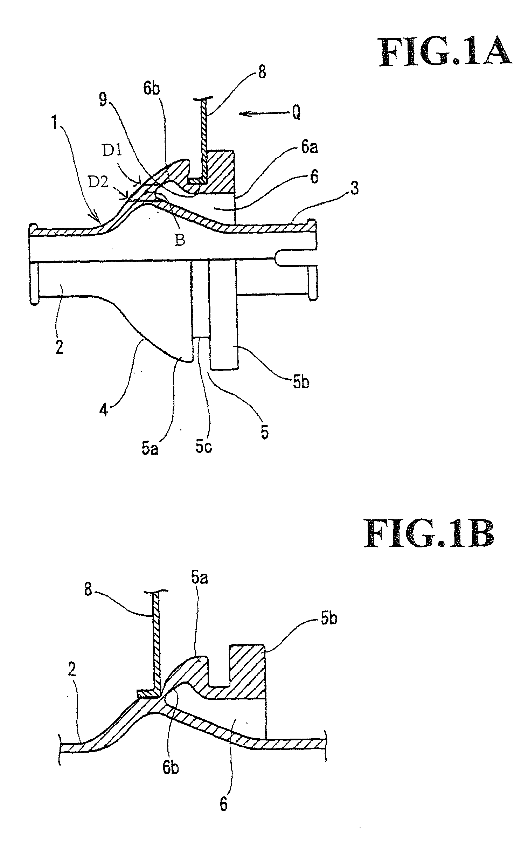

As shown in Figs.1A and 1B, the known grommet 1 comprises a first cylindrical portion 2, a middle portion and a second cylindrical portion 3, arranged sequentially along the common cylindrical axis. The middle portion comprises an internal cylindrical section, and a bulge section 4 which flares radially over the internal cylindrical section along the cylindrical axis. The bulge section 4 includes a circular groove 5 located on its outer surface, thereby defining a slant segment 5a and a fringe segment 5b. There is also provided an axial circular cavity 6 located between the bulge section 4 and the internal cylindrical section.

As indicated in Fig.1A, the grommet 1 is press-fitted from the engine compartment X towards the passenger compartment Y along arrow Q. The bulge section 4 is then deflected inwardly in the radial direction, by virtue of the configuration of the axial circular cavity 6, and passes through a hole 9 made in a body panel 8. After the passage, the bulge section 4 is restored into the original shape, and the body panel 8 is fitted into the circular groove 5 between the slant segment 5a and fringe segment 5b of the bulge section 4.

The grommet 1 such as mentioned above, however, must be provided with an easily-deformable slant segment 5a if a smooth insertion is to be ensured. For this reason, the axial circular cavity 6 is configured as a deep recess having a circular opening 6a and a closed circular end 6b. The depth of the cavity 6 extends from its opening 6a up to its closed circular end 6b, which extends beyond the circular groove 5 along the cylindrical axis. The closed circular end 6b of the axial circular cavity 6 is then deflected outwardly in the radial direction of the grommet 1, so that it attains about the same radial level as the base 5c of the circular groove 5.

Further, the bulge section 4 and the internal cylindrical section, when viewed from the side, form a bifurcated section with a branching base point B.

In such a configuration, when the grommet 1 is inserted into the panel hole 9, the peripheral rim of the panel hole 9 abuts against the external surface of the slant section 5a in proximity of the branching base point. To assess the deformation behaviour of this abutment area, the wall thickness of the slant segment 5a, measured along the grommet's insertion direction (cylindrical axis direction), may be taken as a suitable criterion. As shown in Fig.1A, the wall thickness (D1) at a position slightly above point B is thinner than that (D2) at a position slightly below point B. As a result, when the hole's peripheral rim abuts to the slant section 5a, the latter tends to be deflected outwardly in the grommet's radial direction, by virtue of the abutting force of the body panel 8 (see Fig.1B). This outward deflection causes the slant segment 5a to be grasped by the peripheral rim of the hole 9 in the body panel 8, and the grommet 1 is prevented from entering further into the hole 9.

Thus, although the axial circular cavity 6 is purported to facilitate the inward deflection of the slant segment 5a, it is nonetheless all too ofter deflected outwardly. The insertion of the grommet 1 is then rendered difficult, and/or a strong insertion force is required.

To reduce this insertion force, the axial circular cavity 6 may be made more spacious. However, when it is too spacious, the slant segment 5a of the bulge section 4 may fall excessively deeply into the void of the axial circular cavity 6. Then, the fringe segment 5b, standing adjacent to the slant segment 5a, may pass through the panel hole 9, without the circular groove 5 fitting into the body panel 8.

Further, DE 199 22 471 A discloses a grommet according to the preamble of claim 1 having an additional cylindrical portion, which is turned inside out when the grommet is passed through a hole in a vehicle's body panel.

The present invention has been conceived to provide a grommet that solves such problems. According to the invention, when the grommet is inserted into the panel hole, the slant circular segment of the bulge section is deflected inwardly in a reliable way, so that the insertion operation of the grommet can be improved considerably. Further, the circular fringe segment is prevented from going through the panel hole, so that the body panel can be engaged with the circular groove more reliably.

To this end, there is provided a grommet for wire harness formed of an elastic material having a substantially cylindrical shape with front and rear ends. The grommet comprises a bulge cylindrical portion including a flared section, a skirt section and a cylindrical leg section, the skirt section and the cylindrical leg section forming an axial circular cavity having a an internal circular base and an opposing circular opening. The grommet of the invention is characterised in that:
the skirt section comprises a main body section and a shaped section axially extending therefrom around the cylindrical leg section, and defining on its external surface a peripheral circular branching base from which the shaped section branches from the cylindrical leg section; and
the internal circular base is located further from the peripheral circular branching base towards the front end of the grommet.

Preferably, the internal circular base of the axial circular cavity is placed inwardly in the radial direction of the grommet, with respect to the peripheral circular branching base of the shaped section.

Preferably yet, the main body section has an external circular face, whose diameter enlarges slightly towards said shaped section.

Typically, the shaped section comprises, sequentially from the main body section, a slant circular segment, a circular groove with a base and a circular fringe segment. The axial circular cavity is then defined into an open-side cavity and a closed-side cavity respectively having a segment-side circular face and an axis-side circular face.

The segment-side circular face of the open-side cavity is preferably slanted outwardly in the radial direction up to the circular opening, whilst the axis-side circular face thereof extends substantially parallel to the cylindrical axis.

Likewise, the shaped section comprises, sequentially from the main body section, a slant circular segment, a circular groove with a base and a circular fringe segment. The axial circular cavity is likewise defined into an open-side cavity and a closed-side cavity respectively having a segment-side circular face and an axis-side circular face.

The segment-side circular face of the closed-side cavity preferably extends substantially parallel to the cylindrical axis, whilst the axis-side circular face thereof is slanted outwardly in the radial direction up to the internal circular base.

Preferably, the closed-side cavity 15b is placed inward in the radial direction, with respect to the level of the base 16c of the circular groove 16.

Further according to the invention, the axis-side circular face of the open-side cavity is provided with studs at a given pitch in the circumferential direction of the cylindrical leg section.

The studs have a projection, such that the distance between the tip of the studs and the corresponding segment-side circular face is kept constant, irrespective of the sizes of the circular fringe segment and the cylindrical leg section and such that, when the shaped section is tilted inwardly and comes into contact with the tip of the studs, the external diameter of the circular fringe segment is kept greater than the diameter of a panel hole in a body panel, into which the grommet is to be inserted.

Suitably yet, the panel hole of the body panel and the shaped section respectively have an oval shape, whilst the cylindrical leg section has a round shape, and the studs located at a relatively longer diameter side of the oval shape are made to project more than the studs located at a relatively shorter diameter side thereof.

Typically, the circular groove in the shaped section is adapted to be inserted into the panel hole and hooked thereby.

Further, the grommet may comprise, in addition to the bulge cylindrical portion, a front cylindrical portion and a rear cylindrical portion.

When a wire harness has to contain many electrical cables and the cylindrical leg section of the grommet is enlarged accordingly, the projection of the studs must be shortened. Conversely, when the electrical cables are less numerous and the cylindrical leg section is rather thin, the studs must be made to project more. The distance between the top of the studs and the frill-end segment is thus kept constant, and the maximum inclination rate of the circular fringe segment is restricted to a predetermined value. In this manner, the grommet can be inserted into the panel hole with a small constant force, and prevented from passing through the hole.

In a preferred embodiment, the hole of the body panel and the skirt section (or the shaped section only) respectively have an oval shape, whilst the cylindrical leg section has a round shape. Then, the studs located at a relatively long diameter side of the oval shape are made to project more than those located at a relatively shorter diameter side.

In this manner, the maximum inclination rate at the longer diameter side of the oval shape and the one at the shorter diameter side thereof can be kept constant.

In the above grommet, the circular branching base for the circular slant segment is placed outside the circular closed end line of the axial circular cavity in the radial direction of the grommet. Accordingly, the circular slant segment, contrary to the prior art case, is prevented from deflecting outwardly and abutting against the body panel. Conversely, it is deflected inwardly into the axial circular cavity, and the insertion operation can be performed very smoothly. Moreover, by virtue of a large opening of the axial circular cavity, the shaped section (including the circular slant segment) can be very easily inclined into the axial circular cavity. The grommet can thus be installed into the panel hole by one motion with minimal insertion force.

The above, and the other objects, features and advantages of the present invention will be made apparent from the following description of the preferred embodiments, given as examples, with reference to the accompanying drawings, in which:
Fig.1A is a sectional side view of a prior art grommet when appropriately inserted into a panel hole;
Fig.1B is a partial cross-sectional side view of the prior art grommet of Fig. 1A, when it is being inserted into the panel hole;
Fig.2 is a sectional side view of a grommet according to the invention, before being inserted into a panel hole;
Fig.3 is a sectional side view of the grommet of Fig.2, when inserted into the panel hole;
Fig.4A is a cross-sectional view of the grommet of Fig.2 taken along line IV-IV;
Fig.4B is a cross-sectional view of a variant of the grommet of Fig.2 taken along line IV-IV;
Fig.5 is an enlarged sectional view of an essential portion of the grommet of Fig.2;
Fig.6 is an enlarged sectional view of the essential portion of the grommet of Fig.5, illustrating how the shaped section of the grommet is deflected when it is inserted into a body panel hole; and
Fig.7 is a cross-sectional view of a variant grommet, in which the cylindrical leg portion is provided with proportionally lengthened studs.

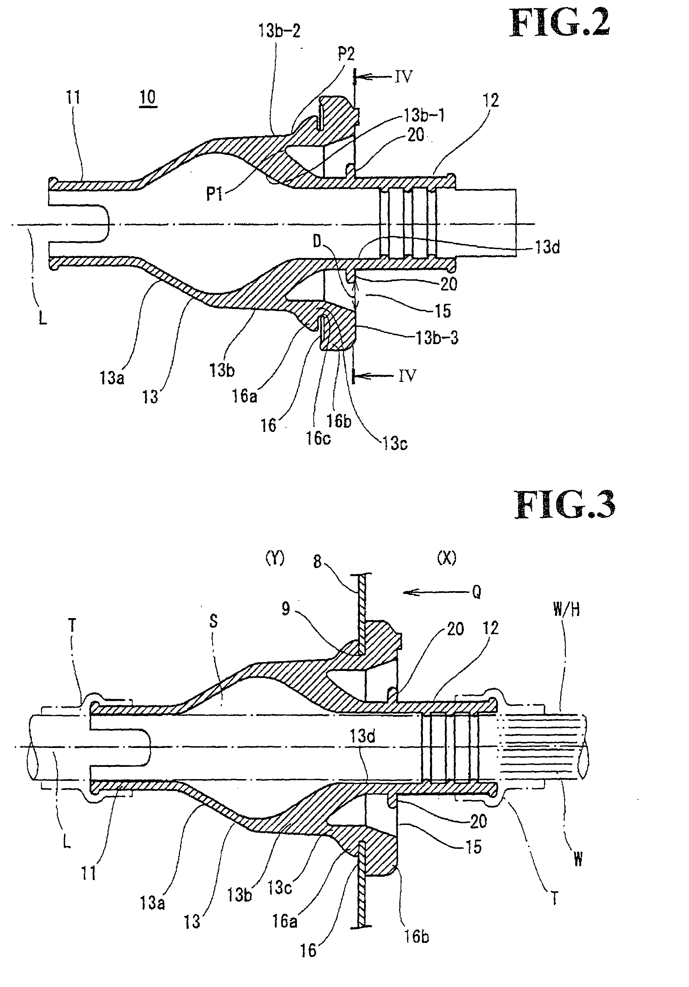

As shown in Fig.2, a grommet 10 of the present embodiment is formed integrally of rubber or an elastomer having a substantially cylindrical shape with a cylindrical axis L. It comprises, sequentially, a front cylindrical portion 11, with which the grommet 10 is led into the panel hole, a bulge cylindrical portion 13, and a rear portion 12. The bulge cylindrical portion is composed of a flared section 13a, a main body section 13b, a shaped section 13c and a cylindrical leg section 13d. The body panel 8 is provided with e.g. a round panel hole 9, which engages with the inserted grommet 10. The bulge cylindrical portion 13 is then given a circular cross-section in accordance with the panel-hole's shape.

As shown in Fig.3, a wire harness W/H composed of electrical cables W is passed through the grommet 10 along the cylindrical axis L. In this state, the electrical cables W are closely surrounded by the internal circular face of the respective front and rear cylindrical portions 11 and 12 of the grommet 10. The front and rear cylindrical portions are then wrapped with a tape, and fixed to the electrical cables W, such that there forms a closed anti-noise space S in the bulge cylindrical portion 13 between its internal face and the electrical cables W.

The grommet 10 is thus fitted around the wire harness W/H, and the whole structure is inserted into the panel hole 9 of the body panel 8, from the engine-compartment side along arrow Q. The peripheral rim of the panel hole 9 is then fitted into the circular groove 16 formed around a part of the bulge cylindrical portion 13 (see infra).

As mentioned above, the flared section 13a of the bulge cylindrical portion 13 extends sequentially from the front cylindrical portion 11 along the cylindrical axis, and the main body section 13b further extends therefrom along the cylindrical axis. The main body section 13b has an internal circular face 13b-1, the diameter of which decreases towards the rear cylindrical portion 12 of the grommet 10 and continues to that of the cylindrical leg section 13d. Likewise, the main body section 13b has an external circular face 13b-2, whose diameter enlarges slightly towards the rear cylindrical portion 12.

The bulge cylindrical portion 13 further includes a shaped section 13c with a fringe-end plane 13b-3, and a cylindrical leg section 13d. The shaped section 13c and the cylindrical leg section 13d form an axial circular cavity 15 therebetween, which extends along the cylindrical axis from the fringe-end plane 13b-3 (opening of the cavity 15) towards the front cylindrical portion 11. Conversely, the leg section 13d extends towards the rear cylindrical portion 12 of the grommet 10.

The shaped section 13c contains an expanding slanted external circular face, in extension of the external circular face 13b-2 of the main body section 13b. The shaped section 13c further comprises a circular groove 16 with a groove base 16c. This circular groove divides the shaped section 13c into a circular slant segment 16a and a circular fringe segment 16b. Further, the circular groove 16 is adapted to engage with the peripheral rim of the panel hole 9. The groove base 16c is notched down to the level of the external circular face 13b-2 of the main body section 13b. The circular fringe segment 16b has a radial thickness sufficient to project outwardly in the radial direction beyond the circular slant segment 16a.

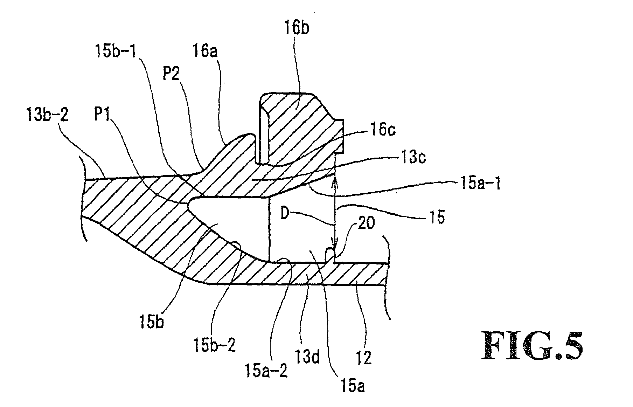

The axial circular cavity 15 is then defined by an open-side cavity 16a and a closed-side cavity 15b, respectively located closer to the cylindrical axis with respect to the corresponding circular fringe segment 16b and circular slant segment 16a. As shown in Fig.5, the segment-side circular face 15a-1 of the open-side cavity 15a enlarges outwardly (in the radial direction) towards the cavity's opening, i.e. towards the rear cylindrical portion 12, whilst its axis-side circular face 15a-2 extends parallel to the cylindrical axis. The longitudinal section of the open-side cavity thus forms a substantially trapezoidal shape. Conversely, the segment-side circular face 15b-1 of the closed-side cavity 16b extends parallel to the cylindrical axis, whilst its axis-side circular face 15b-2 enlarges outwardly (in the radial direction) towards the front cylindrical portion 11. The longitudinal section of the closed-side cavity 15b thus forms a substantially triangular shape. In particular, the closed-side cavity 15b, as a whole, is not inclined outwardly in the radial direction as it extends towards the front cylindrical portion 11, in contrast with the prior art grommet. Accordingly, the closed-side cavity 15b is placed inward (in the radial direction), with respect to the level of the base 16c of the circular groove 16.

The interface between the open-side cavity 15a and the closed-side cavity 15b is set to correspond substantially to a radial plan extended from the circular groove 16. Further, the internal circular base P1 of the closed-side cavity 15b is set to extend beyond the peripheral circular branching base P2 of the circular slant segment 16a towards the front cylindrical portion 11.

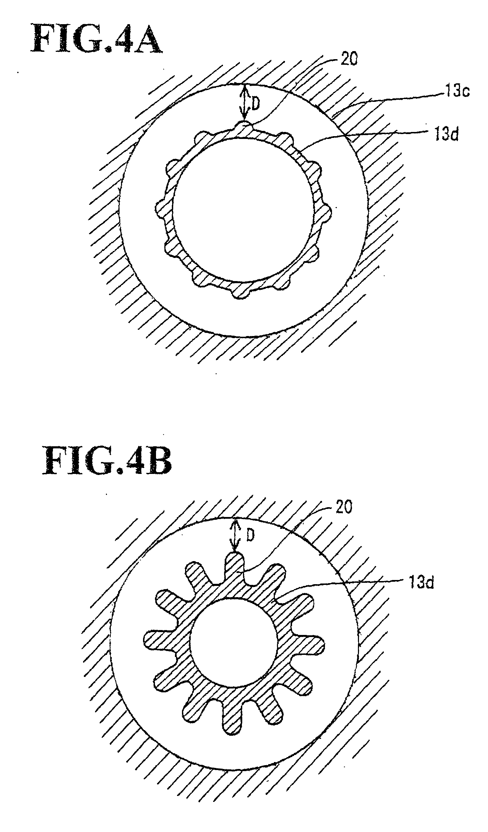

Further, as shown in Figs.4A and 4B, the axis-side circular face 15a-2 of the open-side cavity (i.e. the external circular face of the cylindrical leg section 13d) is provided with studs 20 at a given pitch in the circumferential direction of the cylindrical axis. The studs 20 are designed such that their tip plane always keeps a predetermined distance D with respect to the segment-side face 15a-1 of the open-side cavity 15a.

In the example, the external diameter of the cylindrical leg section 13d varies between 17 mm and 28 mm, depending on the number of electrical wires W contained in the wire harness W/H. The dimensioning of the studs 20 is in turn decided on the basis of the external diameter of the cylindrical leg section 13d. As shown in Fig.4A, the larger external diameter, the shorter the studs 20 are made. Conversely, as shown in Fig.4B, the smaller its external diameter, the more the studs 20 project.

When the grommet 10 is inserted into the panel hole 9, the shaped section 13c is flexed inwardly and comes into contact with the tip plane of the studs 20, so that the maximal strain rate is attained. The distance D at this point is designed such that the external diameter of the circular fringe segment 16b of the shaped section 13c is greater than the diameter of the panel hole 9 in the body panel 8. In this manner, the grommet 10 can be inserted securely into the panel hole 9 with minimal force, whilst it is nonetheless prevented from passing therethrough completely.

The installation of the grommet and wire harness is explained in detail hereafter.

The grommet 10 is mounted around the wire harness (abbreviation W/H) and the whole structure is inserted into the panel hole 9 in the body panel 8 from the engine compartment X towards the passenger compartment Y.

The grommet 10 is passed through the panel hole 9, with the front portion 11 ahead. As the panel hole 9 has a diameter greater than the external diameter of the flared section 13a, the passage of this portion is very easy. The main body section 13b, however, has a diameter substantially the same as the hole diameter. This section is therefore entered into the panel hole 9 with some friction against its peripheral rim.

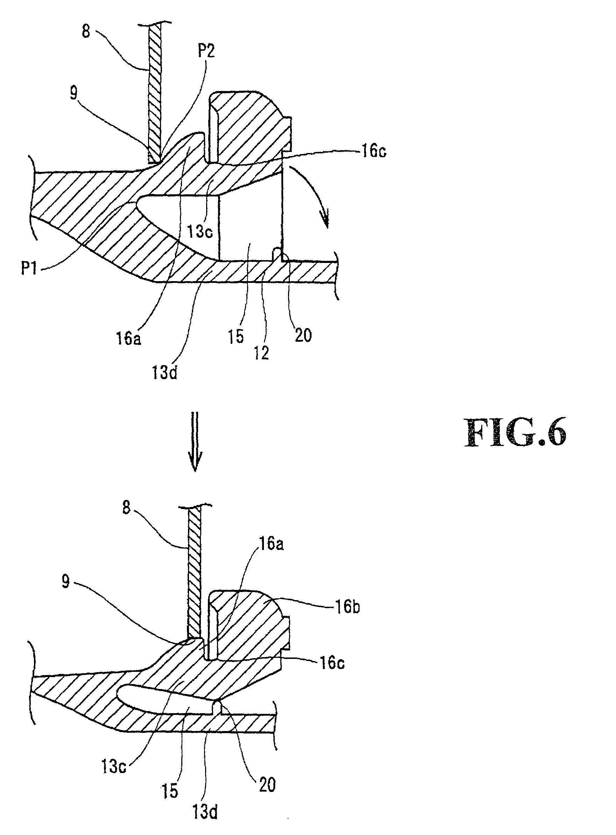

As shown in Fig.6, when the circular slant segment 16a of the shaped section 16 abuts against the peripheral rim of the panel hole 9, the shaped section 13c inclines inwardly into the axial circular cavity 15 around P1 as a fulcrum line. As the axial circular cavity 15 is designed so as to have a large opening, the circular fringe segment 16b of the shaped section 13c is also inclined inwardly by virtue of this large opening. On the other hand, the tilting of the shaped section 13c is restricted by the projection of the studs 20.

Thus, the shaped section 13c can be easily inclined inwardly by the force caused by a contact between the body panel 8 and the circular slant segment 16a, and the latter can pass through the panel hole 9 with a low insertion force.

As mentioned above, even though the shaped section 13c falls inside the axial circular cavity 15, it is ultimately held back by the studs 20. Moreover, even in this state, the external diameter of the circular fringe segment 16b is set to be greater than the diameter of the panel hole 9, so that the segment 16b cannot pass through the panel hole 9. In this manner, the circular fringe segment 16b is placed into contact with the body panel 8.

The circular slant segment 16a restores its original shape after having passed through the hole 9, so that the peripheral rim of the panel hole 9 is clamped between the circular slant segment 16a and the circular fringe segment 16b. Further, the base 16c of the circular groove 16 is designed so as to fit firmly against the peripheral rim of the panel hole 9.

Advantageously, the above operation can be performed in one-motion, by inserting the grommet 10 into the panel hole 9 from the engine compartment X along direction Q.

In a variant embodiment, the body panel 8 is provided with an oval-shaped panel hole 9 which engages with the inserted grommet 10. The bulge cylindrical portion 13 (including the shaped section 13c) of the grommet 10 is then made into an oval shape in accordance with the shape of panel hole.

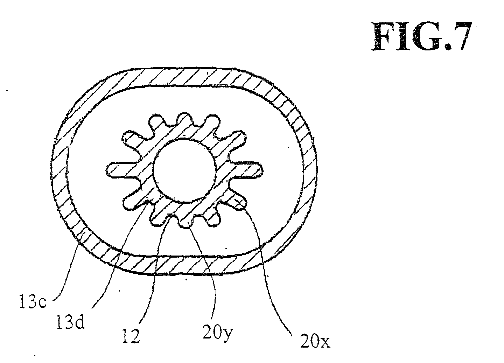

As shown in Fig.7, when the panel hole 9 and the shaped section 13c have respectively an oval shape, while the leg section 13d has a round shape, the studs 20x located at a longer diameter side of the oval shape are built longer than those 20y located at a shorter diameter side thereof. In this manner, the maximum inclination rate of the shaped section 13c is kept constant for the longer and the shorter diameter sides.

As can be understood from above, the circular slant segment of the invention is designed so as to tilt easily into the axial circular cavity when placed in contact with the body panel. In a further preferred embodiment, the internal circular base of the axial circular cavity is placed inwardly in the radial direction with respect to the peripheral circular branching base of the circular slant segment. The circular slant segment is then deflected inwardly further more easily, and the grommet can be inserted with an even smaller force.

Moreover, as the opening of the axial circular cavity is built suitably large, the shaped section (which contains the circular slant segment, the circular fringe segment, and the circular groove defining them) can be very easily tilted into the axial circular cavity. As a result, the force necessary for inserting the grommet can further be reduced.

In addition, as mentioned above, the external circular face of the cylindrical leg section contains studs which can control the inclination rate of the shaped section (which contains the circular groove for fitting with the panel hole). Such a configuration allows the grommet to fit reliably in the body panel, and prevents the grommet from going straight through the panel hole.

## Claims

1. A grommet (10) for a wire harness formed of an elastic material having a substantially cylindrical shape with front and rear ends, said grommet (10) comprising a bulge cylindrical portion (13) including a flared section (13a), a skirt section and a cylindrical leg section (13d), said skirt section and said cylindrical leg section (13d) forming an axial circular cavity (15) which is defined into an open-side cavity (15a) and a closed-side cavity (15b) respectively having a segment-side circular face (15a-1, 15b-1) and an axis-side circular face (15a-2, 15b-2), said skirt section comprising a main body section (13b) and a shaped section (13c), said shaped section (13c) comprising, sequentially from said main body section (13b): a slant circular segment (16a), a circular groove (16) with a base (16c) and a circular fringe segment (16b), **characterised in that**
said axis-side circular face (15a-2) of said open-side cavity (15a) is provided with studs (20) at a given pitch in the circumferential direction of said cylindrical leg section (13d); and
said studs (20) have a projection such that the distance (D) between the tip of said studs (20) and the corresponding segment-side circular face (15a-1) is kept constant, irrespective of the sizes of said circular fringe segment (16b) and said cylindrical leg section (13d) and such that, when said shaped section (13c) is tilted inwardly and comes into contact with said tip of said studs (20), the external diameter of said circular fringe segment (16b) is kept greater than the diameter of a panel hole (9) in a body panel (8), into which said grommet (10) is to be inserted.

2. The grommet (10) for a wire harness according to claim 1, wherein said panel hole (9) of said body panel (8) and at least said shaped section (13c) respectively have an oval shape, whilst said cylindrical leg section (13d) has a round shape, and the studs (20x) located at a relatively longer diameter side of said oval shape are made to project more than the studs (20y) located at a relatively shorter diameter side thereof.

3. The grommet (10) for a wire harness according to claim 1 or 2, wherein said axial circular cavity (15) has an internal circular base (P1) and an opposing circular opening, said shaped section (13c) of said skirt section axially extends from said main body section (13b) around the cylindrical leg section (13d), and defines on the external surface of said shaped section (13c) a peripheral circular base (P2), whereas said cylindrical leg section (13d) branches from said internal circular base (P1) of said main body section (13b), and said internal circular base (P1) is located further from said peripheral circular base (P2) towards said front end of said grommet (10).

4. The grommet (10) for a wire harness according to claim 3, wherein said internal circular base (P1) of said axial circular cavity (15) is placed inwardly in the radial direction of said grommet (10), with respect to said peripheral circular base (P2) of said shaped section (13c).

5. The grommet (10) for a wire harness according to any one of claims 1 to 4, wherein said main body section (13b) has an external circular face (13b-2) whose diameter enlarges slightly towards said shaped section (13c).

6. The grommet (10) for a wire harness according to any one of claims 1 to 5, wherein said segment-side circular face (15a-1) of said open-side cavity (15a) is slanted outwardly in the radial direction up to said circular opening, whilst said axis-side circular face (15a-2) thereof extends substantially parallel to said cylindrical axis.

7. The grommet (10) for a wire harness according to any one of claims 1 to 6, wherein said segment-side circular face (15b-1) of said closed-side cavity (15b) extends substantially parallel to said cylindrical axis, whilst said axis-side circular face (15b-2) thereof is slanted outwardly in the radial direction up to said internal circular base (P1).

8. The grommet (10) for a wire harness according to any one of claims 1 to 7, wherein said closed-side cavity (15b) is placed inward in the radial direction, with respect to the level of said base (16c) of said circular groove (16).

9. The grommet (10) for wire harness according to any one of claims 1 to 8, wherein said circular groove (16) in said shaped section (13c) is adapted to be inserted into said panel hole (9) and hooked thereby.

10. The grommet (10) for a wire harness according to any one of claims 1 to 9, wherein said grommet (10) comprises, in addition to said bulge cylindrical portion (13), a front cylindrical portion (11) and a rear cylindrical portion (12).

## Patentansprüche

1. Durchführungstülle (10) für eine Verkabelung bzw. einen Kabelbaum, welche aus einem elastischen Material gebildet ist, welches eine im wesentlichen zylindrische Form mit vorderen und rückwärtigen Enden aufweist, wobei die Durchführungstülle (10) einen sich wölbenden zylindrischen Abschnitt (13), welcher einen aufgeweiteten Querschnitt (13a) beinhaltet, einen Randquerschnitt und einen zylindrischen Fußquerschnitt (13d) umfaßt, wobei der Rand- bzw. Saumquerschnitt und der zylindrische Fußquerschnitt (13d) einen axialen kreisförmigen Hohlraum (15) ausbilden, welcher in einen offenseitigen Hohlraum (15a) und einen geschlossenseitigen Hohlraum (15b) definiert ist, welcher jeweils eine segmentseitige kreisförmige Fläche bzw. Seite (15a-1, 15b-1) und eine achsenseitige kreisförmige Fläche bzw. Seite (15a-2, 15b-2) aufweist, wobei der Randquerschnitt einen Hauptkörperquerschnitt (13b) und einen geformten Querschnitt (13c) umfaßt, wobei der geformte Querschnitt (13c) beginnend von dem Hauptkörperquerschnitt (13b) umfaßt: ein geneigtes bzw. abgeschrägtes kreisförmiges Segment (16a), eine kreisförmige Rille bzw. Nut (16) mit einer Basis (16c) und ein kreisförmiges Rand- bzw. Einfassungssegment (16b), **dadurch gekennzeichnet, daß**
die achsenseitige kreisförmige Fläche (15a-2) des offenseitigen Hohlraums (15a) mit Stiften (20) unter einem gegebenen Abstand in der Umfangsrichtung des zylindrischen Fußquerschnitts (13d) versehen ist, und
die Stifte (20) einen Vorsprung bzw. Fortsatz derart aufweisen, daß der Abstand (D) zwischen der Spitze der Stifte (20) und der entsprechenden segmentseitigen kreisförmigen Fläche (15a-1) konstant gehalten ist unabhängig von der Größe des kreisförmigen Einfassungssegments (16b) und des zylindrischen Fußquerschnitts (13d), und derart, daß, wenn der geformte Querschnitt (13c) nach innen geneigt ist und in Kontakt mit der Spitze der Stifte (20) gelangt, der Außendurchmesser des kreisförmigen Einfassungssegment (16b) größer als der Durchmesser eines Tafel- bzw. Paneellochs (9) in einer Körpertafel bzw. einem Körperpaneel (8) ist, in welche(s) die Durchführungstülle (10) einzusetzen ist.

2. Durchführungstülle (10) für einen Kabelbaum nach Anspruch 1, wobei das Paneelloch (9) des Körperpaneels (8) und wenigstens der geformte Querschnitt (13c) jeweils eine ovale Form aufweisen, während der zylindrische Fußquerschnitt (13d) eine runde Form aufweist, und die Stifte (20x), welche auf einer Seite eines relativ längeren Durchmessers der ovalen Form angeordnet sind, hergestellt sind, um weiter als die Stifte (20y) vorzuragen, welche an einer Seite eines relativ kürzeren . Durchmessers davon angeordnet sind.

3. Durchführungstülle (10) für einen Kabelbaum nach Anspruch 1 oder 2, wobei der axiale kreisförmige Hohlraum (15) eine innere kreisförmige Basis (P1) und eine gegenüberliegende kreisförmige Öffnung aufweist, wobei sich der geformte Querschnitt (13c) des Randquerschnitts axial von dem Hauptkörperquerschnitt (13b) um den zylindrischen Fußquerschnitt (13d) erstreckt und auf der externen Oberfläche des geformten Querschnitts (13c) eine in Umfangsrichtung verlaufende kreisförmige Basis (P2) definiert, während der zylindrische Fußquerschnitt (13d) von der internen bzw. inneren kreisförmigen Basis (P1) des Hauptkörperquerschnitts (13b) abzweigt, und die interne kreisförmige Basis (P1) weiter entfernt von der in Umfangsrichtung kreisförmigen Basis (P2) in Richtung zu dem vorderen Ende der Durchführungstülle (10) angeordnet ist.

4. Durchführungstülle (10) für einen Kabelbaum nach Anspruch 3, wobei die interne kreisförmige Basis (P1) des axialen kreisförmigen Hohlraums (15) nach innen in der radialen Richtung der Durchführungstülle (10) in bezug auf die in Umfangsrichtung kreisförmige Basis (P2) des geformten Querschnitts (13c) angeordnet ist.

5. Durchführungstülle (10) für einen Kabelbaum nach einem der Ansprüche 1 bis 4, wobei der Hauptkörperquerschnitt (13b) eine externe kreisförmige Fläche bzw. Seite (13b-2) aufweist, deren Durchmesser sich geringfügig zu dem geformten Querschnitt (13c) vergrößert.

6. Durchführungstülle (10) für einen Kabelbaum nach einem der Ansprüche 1 bis 5, wobei die segmentseitige kreisförmige Fläche (15a-1) des offenseitigen Hohlraums (15a) nach außen in der radialen Richtung nach oben bis zu der kreisförmigen Öffnung geneigt bzw. abgeschrägt ist, während sich die achsenseitige, kreisförmige Fläche (15a-2) davon im wesentlichen parallel zu der zylindrischen Achse erstreckt.

7. Durchführungstülle (10) für einen Kabelbaum nach einem der Ansprüche 1 bis 6, wobei sich die segmentseitige kreisförmige Fläche (15b-1) des geschlossenseitigen Hohlraums (15b) im wesentlichen parallel zu der zylindrischen Achse erstreckt, während die achsenseitige kreisförmige Fläche (15b-2) davon nach außen in der radialen Richtung bis zu der internen kreisförmigen Basis (P1) geneigt bzw. abgeschrägt ist.

8. Durchführungstülle (10) für einen Kabelbaum nach einem der Ansprüche 1 bis 7, wobei der geschlossenseitige Hohlraum (15b) nach einwärts in der radialen Richtung in bezug auf das Niveau der Basis (16c) der kreisförmigen Rille (16) angeordnet ist.

9. Durchführungstülle (10) für einen Kabelbaum nach einem der Ansprüche 1 bis 8, wobei die kreisförmige Rille (16) in dem geformten Querschnitt (13c) adaptiert ist, um in das Paneelloch (9) eingesetzt und dadurch eingehakt zu werden.

10. Durchgangstülle (10) für einen Kabelbaum nach einem der Ansprüche 1 bis 9, wobei die Durchführungstülle (10) zusätzlich zu dem sich wölbenden zylindrischen Abschnitt (13) einen vorderen zylindrischen Abschnitt (11) und einen rückwärtigen zylindrischen Abschnitt (12) umfaßt.

## Revendications

1. Douille de traversée (10) pour un faisceau électrique, en un matériau élastique ayant sensiblement une forme cylindrique avec des extrémités avant et arrière, ladite douille de traversée (10) comprenant une portion cylindrique de renflement (13) ayant une section évasée (13a), une section de jupe et une section de colonne cylindrique (13d), ladite section de jupe et ladite section de colonne cylindrique (13d) formant une cavité circulaire axiale (15) qui est définie dans une cavité ouverte latéralement (15a) et une cavité fermée latéralement (15b), ayant respectivement une face circulaire du côté du segment (15a1, 15b-1) et une face circulaire du côté de l'axe (15a-2, 15b-2), ladite section de jupe comprenant une section de corps principal (13b) et une section formée (13c), ladite section formée (13c) comprenant successivement depuis ladite section de corps principal (13b) : un segment circulaire incliné (16a), une rainure circulaire (16) ayant une base (16c) et un segment à frange circulaire (16b), **caractérisée en ce que** :
ladite face circulaire du côté de l'axe (15a-2) de ladite cavité ouverte latéralement (15a) est munie de plots (20) suivant un pas donné dans la direction circonférentielle de ladite section de colonne cylindrique (13d) ; et
lesdits plots (20) étant en saillie de manière à ce que la distance (D) entre le bout desdits plots (20) et la face circulaire du côté du segment (15a-1) correspondante soit maintenue constante, indépendamment des dimensions dudit segment à frange circulaire (16b) et de ladite section de colonne cylindrique (13d) de sorte que, lorsque ladite section formée (13c) est inclinée vers l'intérieur et entre en contact avec ledit bout dudit plot (20), le diamètre extérieur dudit segment à frange circulaire (16b) ait une dimension supérieure à celle du diamètre d'un orifice de panneau (9) dans un corps de panneau (8) dans lequel doit être insérée ladite douille de traversée (10).

2. Douille de traversée (10) pour un faisceau électrique selon la revendication 1, dans laquelle ledit orifice de panneau (9) dudit corps de panneau (8) et au moins ladite section formée (13c) ont respectivement une forme ovale, alors que la section de colonne cylindrique (13d) est ronde et que les plots (20x) situés à un côté du diamètre relativement plus long de ladite forme ovale sont prévus pour être plus en saillie que les plots (20y) situés sur le diamètre relativement plus court de ladite forme ovale.

3. Douille de traversée (10) pour un faisceau électrique selon la revendication 1 ou 2, dans laquelle ladite cavité axiale circulaire (15) a une base circulaire intérieure (P1) et une ouverture circulaire opposée, ladite section formée (13c) de ladite section de jupe s'étendant axialement depuis ladite section de corps principal (13b) autour de la section de colonne cylindrique (13d) et définissant sur la surface extérieure de ladite section formée (13c) une base circulaire périphérique (P2), alors que ladite section de colonne cylindrique (13d) se raccorde depuis ladite base circulaire intérieure (P1) de ladite section de corps principal (13b), ladite base circulaire intérieure (P1) étant située plus loin de ladite base circulaire périphérique (P2) vers l'extrémité avant de ladite douille de traversée (10).

4. Douille de traversée (10) pour un faisceau électrique selon la revendication 3, dans laquelle ladite base circulaire (P1) de ladite cavité circulaire axiale (15) est placée vers l'intérieur dans la direction radiale de ladite douille de traversée (10) par rapport à ladite base circulaire périphérique (P2) de ladite section formée (13c).

5. Douille de traversée (10) pour un faisceau électrique selon l'une quelconque des revendications 1 à 4, dans laquelle ladite section de corps principal (13b) a une face circulaire extérieure (13b-2) dont le diamètre s'agrandit légèrement dans la direction de la section formée (13c).

6. Douille de traversée (10) pour un faisceau électrique selon l'une quelconque des revendications 1 à 5, dans laquelle ladite face circulaire du côté du segment (15a-1) de ladite cavité ouverte latéralement (15a) est inclinée vers l'extérieur dans la direction radiale jusqu'à ladite ouverture circulaire, alors que sa face circulaire du côté de l'axe (15a-2) s'étend dans une direction sensiblement parallèle audit axe cylindrique.

7. Douille de traversée (10) pour un faisceau électrique selon l'une quelconque des revendications 1 à 6, dans laquelle ladite face circulaire du côté du segment (15b-1) de ladite cavité fermée latéralement (15b) s'étend dans une direction sensiblement parallèle audit axe cylindrique, alors que sa face circulaire du côté de l'axe (15b-2) est inclinée vers l'extérieur dans la direction radiale jusqu'à ladite base circulaire intérieure (P1).

8. Douille de traversée (10) pour un faisceau électrique selon l'une des revendications 1 à 7, dans laquelle ladite cavité fermée latéralement (15b) est placée vers l'intérieur dans la direction radiale, par rapport au niveau de ladite base (16c) de ladite rainure circulaire (16).

9. Douille de traversée (10) pour un faisceau électrique selon l'une des revendications 1 à 8, dans laquelle ladite rainure circulaire (16) dans ladite section formée (13c) est adaptée pour être insérée dans ledit orifice de panneau (9) et agrafée par celui-ci.

10. Douille de traversée (10) pour un faisceau électrique selon l'une quelconque des revendications 1 à 9, dans laquelle ladite douille de traversée (10) comprend en plus de ladite portion cylindrique de renflement (13) une portion cylindrique avant (11) et une portion cylindrique arrière (12).
